# EUROPEAN PATENT APPLICATION

(11) **EP 2 120 360 A1**
(43) Date of publication of application: **18.11.2009**
(21) Application number: 08380150.6
(22) Date of filing: 13.05.2008
(51) Int. Cl.: H04B 7/005

(54) **Method and system of quality enhancement in GSM**

(71) Applicant: Vodafone Group PLC, Newbury Berkshire RG14 2FN (GB); Vodafone España, S.A., 28108 Alcobendas (Madrid) (ES)
(72) Inventor: Koehler, Robert Vodafone Espana, S.A., 28108 Alcobendas, Madrid (ES); Gomez, Alberto Vodafone Espana, S.A., 28108 Alcobendas, Madrid (ES); Arranz, Miguel Vodafone Espana, S.A., 28108 Alcobendas, Madrid (ES)
(74) Representative: Carpintero Lopez, Francisco

(57) **Abstract**

A method of enhancing the quality of a communication between a mobile user (MT1) and a serving cell (C1-3) which provides said mobile user (MT1) with a traffic channel, said serving cell (C1-3) belonging to a base station (BTS1) having one or more cells, said base station (BTS1) being attached to a base station controller (BSC1), said base station controller (BSC1) having other base stations (BTS2, BTS3) attached thereto, each of said other base stations (BTS2, BTS3) having at least one cell, said base stations having their respective timeslots synchronised is provided. It comprises the steps of: at said mobile user (MT1), measuring a plurality of signal levels received by said mobile user (MT1), said plurality of signal levels comprising the signal contribution of said serving cell (C1-3) at said traffic channel and a respective signal level of a plurality of cells belonging to said base station controller (BSC1); reporting said measured signal levels from said mobile user (MT1) to said serving cell (C1-3); sending said measured signal levels from said serving cell (C1-3) to said base station controller (BSC1). It also comprises the following steps: from said plurality of cells which provide a respective signal contribution, selecting a group of cells; using the information of said signal contributions of said selected cells to increase the quality of the signal associated to said mobile user (MT1) once decoded at said base station controller (BSC1).

## Description

### FIELD OF THE INVENTION

The present invention relates to mobile communication systems and, especially, to enhancing quality of traffic in the Base Station Subsystem (BSS).

### STATE OF THE ART

In mobile communication systems, and more specifically, in GSM networks, there is a limited amount of resources (frequencies) which are shared by a plurality of mobile terminals or users. Several ways of taking advantage of these limited resources have been implemented.

One of these techniques is called "Dynamic Frequency Allocation", implemented at the base station controller (BSC) as a feature for the dynamic reuse of frequencies for each mobile user, based on the real, specific radio conditions experienced by that mobile user. If this feature is not used, a static frequency allocation is used instead, as a consequence of which all the mobile users attached to a same base transceiver station (also called base station) (BTS) use the same frequencies. This personalised frequency allocation based on frequency reuse applies to both the uplink direction (from mobile terminal to base station) and the downlink direction (from base station to mobile terminal).

A drawback associated to the frequency reuse is interference, which degrades the quality of the signal received by the mobile terminal or the base station (BTS). Among others, this has an impact on the voice quality, on the throughput for GPRS/EDGE connections and on the capacity, since frequency reuse affects the number of mobile users that each base station (BTS) can handle.

Regarding the frequency reuse, synchronisation between BTSs allows the estimation of the interference that other mobile terminals or users create.

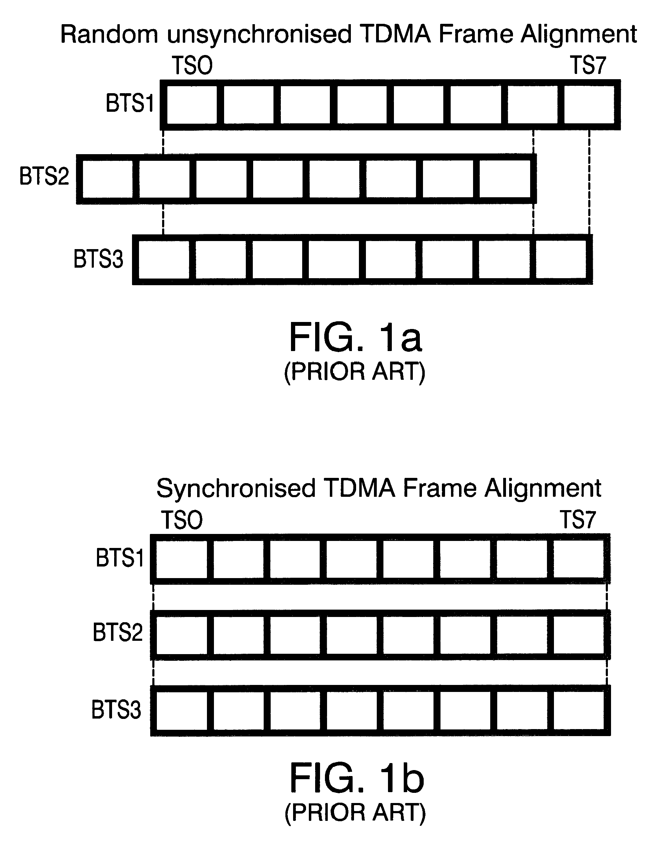

In order to synchronize the transmission times of a base station (BTS) in such a way that the different signals involved in a communication arrive at the same time at the mobile terminal or mobile user and at the serving BTS, different conventional techniques are used. Figure 1 shows a comparison between a random unsynchronised TDMA frame alignment (figure 1a) and a synchronised TDMA frame alignment (figure 1b).

However, in spite of this attempt of frequency reuse while provoking as little interference as possible, interference unavoidably turns up, mainly due to the fact that the frequency spectrum is limited.

Assuming that interference is impossible to prevent, a technique called "Interference Rejection Combining" has been developed: A base station (BTS) usually receives a signal having not only the signal component of interest (from the actual mobile user), but also one or more other signal components coming from interfering mobile terminals or users, due to the already mentioned interference. This technique of "Interference Rejection Combining" is done for extracting, as much as possible, the signal of interest from the interfering components. It requires synchronisation between the different BTSs (or more precisely, synchronisation between the TDMA frames of the different BTSs) thus allowing a better rejection of the non-desired signals.

However, it has been observed that these techniques for reducing interference do not manage to eliminate it completely.

### SUMMARY OF THE INVENTION

It is a primary aim of the present invention to provide a method of taking advantage of non-desired signal components received at a base station (BTS).

In a first embodiment, a method of enhancing the quality of a communication between a mobile user and a serving cell which provides that mobile user with a traffic channel, that serving cell belonging to a base station having one or more cells, the base station being attached to a base station controller, the base station controller having other base stations attached thereto, each of those other base stations having at least one cell, the base stations having their respective timeslots synchronised, is provided. It comprises the steps of: at said mobile user, measuring a plurality of signal levels received by said mobile user, said plurality of signal levels comprising the signal contribution of said serving cell at said traffic channel and a respective signal level of a plurality of cells belonging to said base station controller; reporting said measured signal levels from said mobile user to said serving cell; sending said measured signal levels from said serving cell to said base station controller. The method further comprises the following steps: from said plurality of cells which provide a respective signal contribution, selecting a group of cells; using the information of said signal contributions of said selected cells to increase the quality of the signal associated to said mobile user once decoded at said base station controller.

The step of using the information of said signal contributions of said selected cells preferably comprises the step of: at said base station controller, for each of said selected cells, checking if said cell has available Abis resources in order to send previously received information to the base station controller; and at said base station controller, for each of said selected cells, checking if said cell has available radio receiving resources.

For each cell, if there are available Abis resources and available radio receiving resources, the base station controller requests said cell to receive said channel comprising the signal contribution of said cell and to send said signal to the base station controller through the Abis.

For each cell, if there are available Abis resources but there are not available radio receiving resources, the base station controller checks whether the desired information to be received is already being received at said cell or not. In this situation, if said desired information to be received is already being received at said cell, the base station controller requests the base station to which said cell belongs to receive said channel comprising the signal contribution of said cell by means of its IRC module and to send it to the base station controller through the Abis. Alternatively, if said desired information to be received is not already being received at said cell, said cell is disregarded.

For each cell, if there are not available Abis resources, said cell is disregarded.

If there are available Abis resources, if said cell belongs to the same base station as the serving cell, the base station controller requests said same base station to transmit said signal to the base station controller through the Abis. Alternatively, if said cell belongs to a base station different from the base station to which the serving cell belongs, the base station controller requests the base station to compare the signal level of the signal contribution of the serving cell to the signal level of the signal contribution of the other cell and to transmit the signal contribution having better quality to the base station controller through the Abis.

Besides, the step of selecting a group of cells from said plurality of cells, comprises the steps of: at the base station controller, for each cell of said plurality of cells the signal contribution of which has been measured, comparing its respective signal level to the signal contribution of said serving cell; selecting the cells whose signal level contribution is above a certain threshold.

Another object of the present invention relates to a computer program comprising computer program code means adapted to perform the steps previously indicated when said program is run on a computer, a digital signal processor, a field-programmable gate array, an application-specific integrated circuit, a micro-processor, a micro-controller, or any other form of programmable hardware.

The advantages of the proposed invention will become apparent in the description that follows.

### BRIEF DESCRIPTION OF THE DRAWINGS

To complete the description and in order to provide for a better understanding of the invention, a set of drawings is provided. Said drawings form an integral part of the description and illustrate a preferred embodiment of the invention, which should not be interpreted as restricting the scope of the invention, but just as an example of how the invention can be embodied. The drawings comprise the following figures:
Figure 1a shows an unsynchronised TDMA frame. Figure 1b shows a synchronised one.
Figure 2 is a schematic representation of a base station controller, a group of base stations attached thereto and some mobile users in turn attached to corresponding base stations.
Figure 3 shows a flow diagram of the actions taken at a base station controller according to the method of the present invention.
Figure 4 shows a flow diagram of the deletion of cells from the receiving set according to an embodiment of the present invention.
Figure 5 illustrates the steps taken at the base station controller for building and updating the receiving set of cells based on the measurements performed by a mobile station.
Figure 6 shows a flow diagram of a channel allocation according to an embodiment of the present invention.

### DESCRIPTION OF PREFERRED EMBODIMENTS OF THE INVENTION

The implementation of the present invention can be carried out as follows:

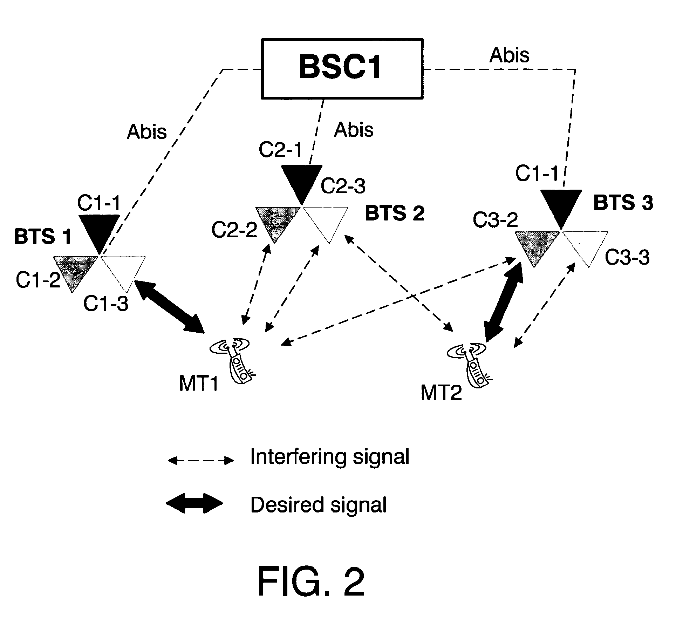

Figure 2 shows a schematic representation of a Base Station Subsystem (BSS) of a mobile communications network, wherein a base station controller (BSC) BSC1 having a group of base stations (BTS) attached thereto is illustrated. This network can be any network supporting 2G communications technologies. Non-limiting examples of such networks are: DECT, GSM, GPRS, EDGE, etc.

In this example, three base stations BTS1 BTS2 BTS3 are attached to the base station controller BSC1. In this example, the first base station BTS1 has three cells C1-1 C1-2 C1-3, the second base station BTS2 has three cells C2-1 C2-2 C2-3 and the third base station has three cells C3-1 C3-2 C3-3. This configuration is merely illustrative and not limitative. Other configurations of the base stations are thus possible. Figure 2 also shows two mobile users or terminals MT1 MT2, each of them attached to a BTS. Mobile terminal MT1 is attached to a first base station BTS1, as represented by a solid arrow. Mobile terminal MT2 is attached to a third base station BTS3, as represented by another solid arrow. A traffic channel has been established (establishment of a voice call) between each mobile terminal MT1 MT2 and its corresponding serving cell C1-3 C3-2. However, the actual communication between the first mobile user MT1 and the base station BTS1 to which it is attached also causes undesired signals or interference, as represented by dotted arrows. In this example, undesired signals between mobile terminal MT1 and several cells C2-2 C2-3 C3-2 are illustrated. Similarly, the actual communication between the second mobile user MT2 and the base station BTS3 to which it is attached also causes undesired signals or interference, as represented by dotted arrows. In this case, undesired signals between mobile terminal MT2 and some cells C2-3 C3-3 are illustrated.

If signals are synchronised, base stations (BTSs) can easily detect the signals from the non-desired mobile terminals.

The present invention provides a method of taking advantage of non-desired signal components received at the base stations (BTS). It is based on a multi-cell receiving process. The method uses the signal contribution of a serving cell plus several signal contributions received by other cells. All these contributions are from now on called receiving set.

The base station controller BSC1 keeps control of the calls that are received in multiple BTSs. Referring to the example of figure 2, the base station controller BSC1 controls the calls established through base stations BTS1 BTS2 BTS3. The base station controller BSC1 decides which cells of different base stations (BTS) take part in the multi-cell receiving process. The decision of the BSC is mainly based on the measurements reported by the different base stations BTS1 BTS2 BTS3 and on the traffic status that can be easily calculated by the BSC.

Due to the already mentioned interference, each communication signal is received in the uplink by several cells belonging to the same BSC. For example, the communication signal of mobile user MT1 is received by the third cell C1-3 of BTS1 (to which it is attached) and by the second and third cells C2-2 C2-3 of BTS2 and second cell C3-2 of BTS3. The cell C1-3 of BTS1 (to which the mobile terminal MT1 is attached) is called serving cell.

Each cell C1-3 C2-2 C2-3 C3-2 uses a channel to receive the corresponding signal. A channel is to be understood as a radio frequency during a specific time (a time slot).

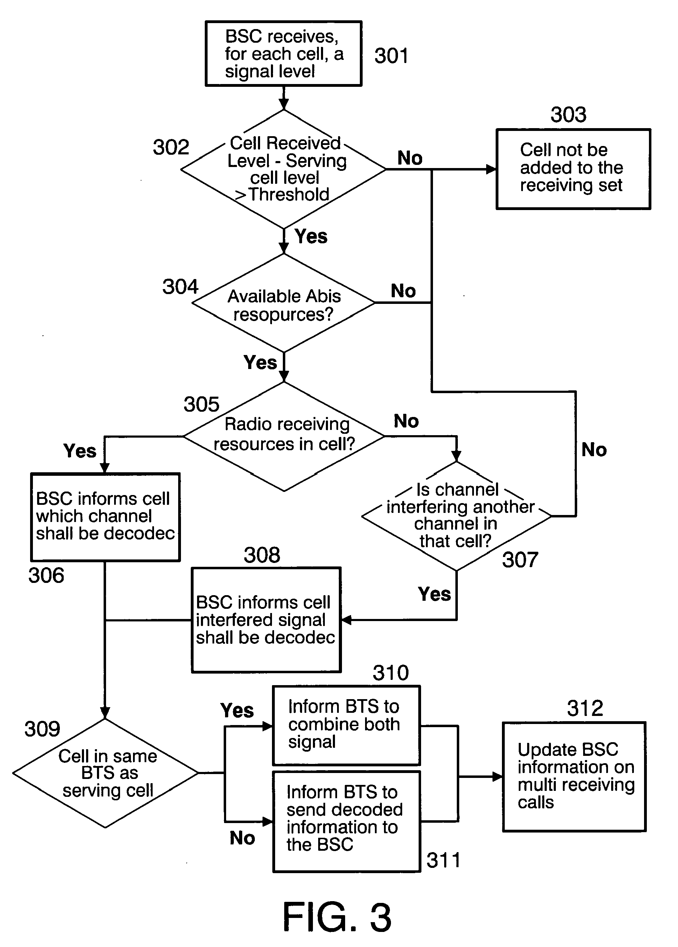

Figure 3 shows a flow diagram of the actions taken at the base station controller (BSC) BSC1 in order to decide if the different cells fulfil the requirements to be part of the receiving set.

The method of the invention is based on the fact that, if signals are synchronised, base stations can easily detect non-desired signal contributions, such as the already described interfering signals at cells C2-2 C2-3 C3-2. Thus, one of the steps of the method of the invention is synchronising the timeslots assigned to the base stations BTS1 BTS2 BTS3 attached to the base station controller BSC1. These non-desired signal contributions can be used, if there are available channels, to enhance the quality of the communication held by mobile user MT1. If there are not available channels, the non-desired signal contributions can be eliminated from the actual information.

The method of the invention is based on algorithms located in the base station controller BSC1, which is the part of the network which decides the contribution of which BTSs (and of which cells within a BTS) to use to enhance the quality of a communication. As apparent for a skilled person, radio resource management is, in GSM, controlled by the base station controller BSC1. That is why the intelligence of the different algorithms is located in the BSC. The base station controller BSC1 uses the different measurements taken at the different BTSs and reported by the BTSs through the Abis interface.

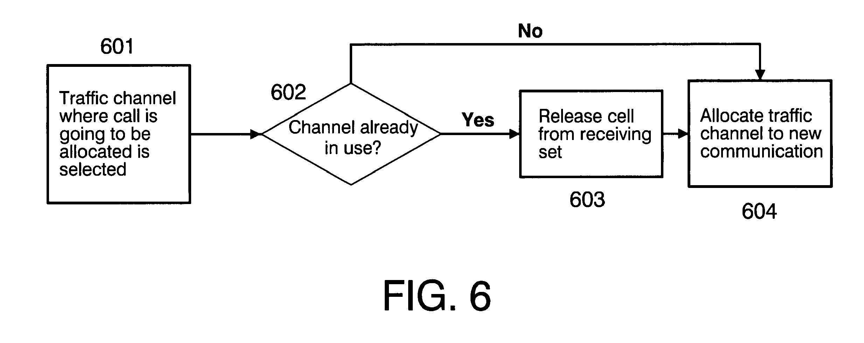

Once the algorithms are implemented, a non-serving cell might have some resources allocated to receive a certain mobile user. This has to be considered in the process in which a new user is allocated in that non-serving cell. This is later described in figure 6. If resources that are going to be allocated to that mobile user are in use, those resources need to be previously released so they can be used by the new mobile user.

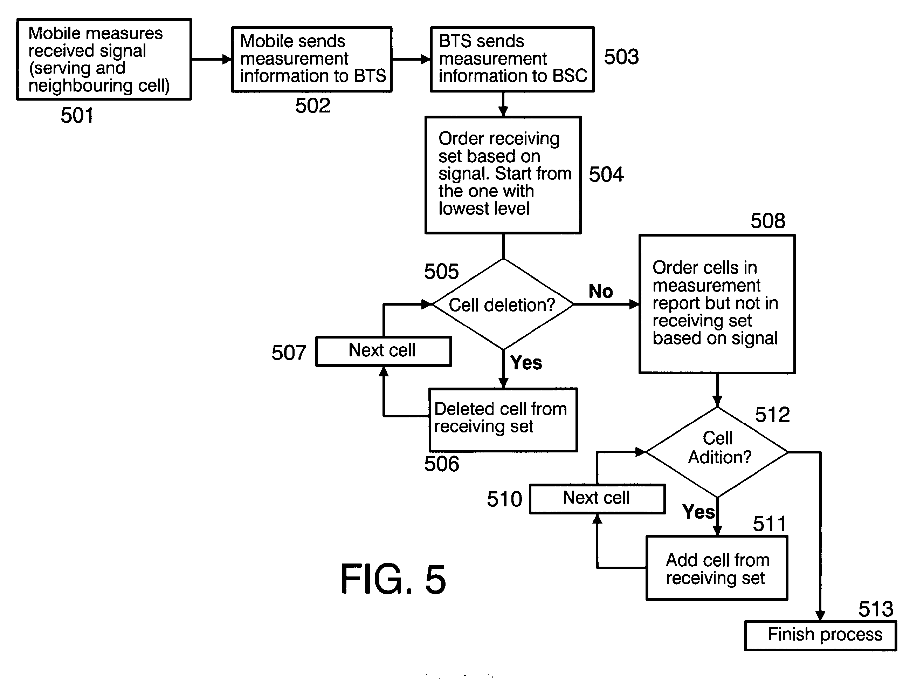

The mobile user MT1 measures the signal level received at a specific traffic channel. This signal level is formed by several signal contributions: the signal contribution of the actual serving cell C1-3 plus several signal contributions coming from other cells C2-2 C2-3 C3-2 (those cells belonging either to the same base station BTS1 or to a different base station BTS2 BTS3). The mobile user MT1 measures each frequency as defined in the standard so after they are sent to the base station controller (BSC) BSC1, the BSC is able to decide whether to perform a handover to any other cell or not (block 501 and block 502 of figure 5). The base station (BTS) sends those measurements reports to the BSC with additional measurement information performed by the BTS (block 503 of figure 5).

The base station controller BSC1 orders the different cells based on the received signal level, but only the ones that are already included in the receiving set, in order to decide if it makes sense that they are still part of the receiving set (block 504).

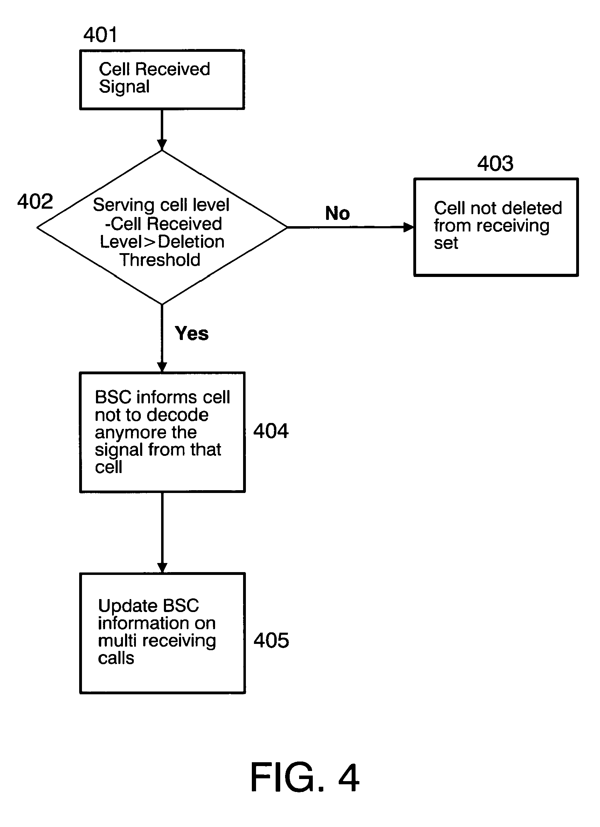

In figure 4, a flow diagram is described, intended to decide if each cell must still be part of the receiving set. It is also represented in figure 5 by block 505 and following ones. Each cell that is part of the receiving set is processed (block 506 and 507 of figure 5).

Once all the cells included in the receiving set are processed, the base station controller BSC1 orders all the cells that are not part of the receiving set in order to decide if they should be included or not in the receiving set (block 508).

Figure 3 shows a flow diagram intended to decide if each cell fulfils the requirements for remaining in the receiving set or not. This is also summarised in figure 5 (block 512), wherein each cell that is part of the receiving set is processed (block 510 and 511). Figure 3 also represents the steps of enhancing the quality of the communication as provided by the invention.

Next, the method of the present invention is illustrated with respect to figure 3.

For a certain cell, the level of the received signal contribution is compared by the base station controller BSC1 to the level of the contribution of the serving cell C1-3. In other words, it is compared whether the received or extracted level of that signal contribution (provided by a certain cell) minus the level received by the serving cell is higher than a certain threshold or not (block 302).

If the received or extracted level of the received signal contribution minus the level coming from the serving cell is lower than that threshold, the cell (for example, cell C2-2) is not added to the group of cells forming the receiving set (block 303).

If, on the contrary, that difference is higher than the threshold, that cell (for example, cell C2-3) is considered to be added to the group of cells forming the receiving set.

The information provided by the signal contributions of the respective cells forming the receiving set is used, as explained later on, to increase the quality of the signal associated to the mobile user MT1 once decoded at the base station controller BSC1.

If a cell can be added to the receiving set, the BSC checks if there is enough capacity. In other words, it is checked whether there are traffic resources in the Abis interface (between BTS and BSC) available or not (block 304). This is decided based on a certain threshold, defined by the network operator. The traffic resources depend on the transmission technology used in the specific network. In the exemplified embodiment, the traffic resources are TDMA timeslots. A non-limiting example of a threshold is 15% of the TDMA timeslots. In other words, if the threshold is 15%, it is decided that there is enough capacity if more than 15% of the TDMA timeslots are available at a certain instant.

If it is verified that there are not enough traffic resources, the cell (for example, cell C2-2) is not included in the group of cells forming the receiving set (block 303).

If, on the contrary, it is verified that there are enough traffic resources (Abis between BSC and BTS), it is checked whether there are resources in that cell to receive that signal (for example, cell C2-3) (block 305).

If there are resources in that neighbouring cell (for example, C2-3) to receive that signal, the BSC requests that cell to receive that channel (the one assigned to that timeslot). This means that the BSC asks the BTS to send through the Abis interface the received information (in a similar way as the BSC asks the BTS to send the information received at the serving cell). The BTS is requested to send a signal to the BSC as defined in the Abis interface protocols. Afterwards, the BSC checks whether the received signal is correct or not.

If, on the contrary, there are no receiving resources in that neighbouring cell, the BSC checks if the signal is already being received as interference by that cell in question (block 307). The reason why this is done is that, in order to take advantage of an interfering signal, that cell needs to be tuned in the same channel. That is why, it needs to be checked whether that cell is already receiving that signal as interference or not. It depends on which traffic channels are being used at that moment.

If the signal is not being received as interference by that cell in question, the neighbouring cell is not included in the group of cells forming the receiving set (block 303). This is due to the fact that, in order for a signal contribution to be considered as interference, the reception module of the cell needs to be tuned in that channel.

If, on the contrary, the signal is being received as interference by that cell, the interfering signal can be extracted and decoded by an interference rejection module (block 308), as will explained later.

In other words, if the cell under consideration has idle or available channels at that moment, the BSC requests the BTS to directly send the desired signal by means of that idle channel.

If, on the contrary, the cell under consideration does not have idle channels (because there are all being used at that moment), the desired information cannot be directly sent to the BSC. The module called Interference Rejection Combining, is used in the following way:
Interference rejection module is implemented in each cell in order to reduce the level of interference that is received in each channel. An embodiment of this invention proposes to use that interference that is otherwise dismissed, so it can be used also as a valuable source.

If the BSC decides that an interference signal can be used, it informs the corresponding cell to extract that information so it can be later sent by the BTS to the BSC using Abis interface protocols.

Both blocks 306 and 308 provide the same result: the BSC requests that neighbouring cell to provide the interfering signal to the BSC through the Abis interface.

Next, it is checked whether the neighbouring cell and the serving cell belong to the same BTS or not (block 309).

If they belong to the same BTS (for example, the serving cell is C1-3 and the neighbouring cell is C1-2, both belonging to BTS1), that same BTS is able to combine both signals. Thus, the BSC requests the BTS to combine both signals (block 310).

If, on the contrary, they belong to different BTSs (for example, the serving cell is C1-3 and belongs to BTS1 and the neighbouring cell is C2-3 and belongs to BTS2), the BSC requests the BTS to which the neighbouring cell belongs to send to the BSC the decoded information (block 311).

Finally, the BSC updates the information it keeps about multi-receiving calls (block 312). In other words, it updates its internal information, associating voice calls and traffic channels. The way the BSC manages this information, for example, by means of tables, is dependent on the vendor and is out of the scope of the present invention.

Figure 4 shows a flow diagram of the actions taken at the base station controller (BSC) BSC1 for deleting or not a cell included within the receiving set.

For each of the signals received (block 401) by the receiving set and controlled by the BSC, it is compared whether the level received by the serving cell minus the level received by a certain neighbouring cell is higher than a certain threshold or not (block 402).

If the level received by the serving cell minus the level received by that certain neighbouring cell is not higher than that threshold, the cell (for example, cell C2-2) is not deleted from the group of cells forming the receiving set (block 403).

If, on the contrary, the level received by the serving cell minus the level received by that certain neighbouring cell is higher than that threshold, the base station controller BSC1 informs that neighbouring cell that it stops monitoring and decoding the signal sent by that neighbouring cell and that the neighbouring cell is deleted from the receiving set (block 404).

Afterwards, the base station controller BSC1 updates its information about multi-receiving calls (block 405).

Figure 5 illustrates the steps taken at the base station controller BSC1 for building the receiving set of cells.

As already explained, the mobile user MT1 measures the signal level formed by several signal contributions:
the signal contribution of the actual serving cell C1-3 plus several signal contributions coming from other cells C2-2 C2-3 C3-2 (those cells belonging either to the same base station BTS1 or to a different base station BTS2 BTS3). This is illustrated in block 501 of figure 5. Next, the mobile user MT1 sends the measurements to be base station BTS1, as shown in block 502, which in turn sends them to the base station controller (BSC) BSC1, as shown in block 503. The base station (BTS) sends those measurements reports to the BSC with additional measurement information performed by the BTS.

Next, the base station controller BSC1 processes the received signals from different cells and orders them, preferably starting with the one having the lowest power level (block 504). This ordering process is carried out conventionally in order to decide, among other things, which handovers to make to other cells. This ordering process is out of the scope of the present invention.

Next, it is checked if any cell that is in principle included in the receiving set should be deleted (block 505). This is done by checking, one by one, the cells which have previously been ordered (blocks 503, 504) and applying the steps shown in figure 4.

Next, the base station controller BSC1 processes a measurement report, like the one illustrated in block 301 of figure 3, based on measurements taken by the BTS that the BTS sends to the BSC and on measurements that the mobile user sends to the BSC via the BTS. The base station controller BSC1 then orders (arranges) the cells from which the measurements of the measurement report are obtained (block 508). The measurement report sent to the BSC comprises a list of cells and their associated signal levels. This is sent from the BTS to the BSC, as indicated in figure 3 (block 301). It is to be noted that this ordering or arranging is different from the ordering step based on signal level of block 504.

Then, for each cell of the cells in the measurement report, it is checked if any of those cells should be added to the group (to the receiving set) (block 512). This is done by checking, one by one, the cells which have previously been ordered (blocks 511, 512).

These processes of cell addition or deletion (figures 4 and 5) are launched with the following events:
- Every time the mobile user or terminal MT1 is allocated a traffic channel (during a call setup, during a handover to another cell, during a handover within the same cell...), the base station controller BSC1 looks for a proper receiving cell set.
- Every time a measurement report is sent to the base station controller BSC1 with information about the neighbouring cells information, BSC1 updates the receiving set.
- When a call is released.

In other words, this new method of information reuse in order to increase the signal quality needs to be taken into account every time a new call takes place (in order for a cell to take into account that some timeslots are being used, at least in the downlink, for receiving information although there is no really "active" call involved).

Finally, it is explained how the channel allocation of traffic channels is carried out. Some steps are taken at the base station controller BSC1 and some at the serving base station BTS1.

The flow diagram of figure 3 refers to a specific mobile user which is being served by a cell (for example, the mobile user MT1 being served by cell C1-2 of figure 2). Since, apart from the serving cell C1-3 (figure 2), other neighbouring cells C2-2 C2-3 C3-2 contribute with a signal at the same frequency, the method of the invention permits to constructively use those interfering signals. Figure 6 shows that when a new user is going to be allocated in a cell, it is checked if those resources are already being used, and if that is the case, they should be released.

First, a traffic channel for allocating the decoded information is selected (block 601). It is checked whether that channel is already being used (block 602). If it is used, that neighbouring cell is released from the receiving set (block 603) and another cell is considered. If it is not used, a traffic channel (a timeslot) is allocated and established for sending the decoded information to the BSC (block 604).

Once the communication between the mobile user MT1 and its serving cell C1-3 is finished, the base station controller BSC1 releases all the different channels used to receive the communication. The BSC informs each cell that it does not have to receive and transmit that information any more.

Once the base station controller BSC1 has informed each cell C1-1 C1-2 C1-3 C2-1 C2-2 C2-3 C3-1 C3-2 C3-3 about the channel that is being monitored, as illustrated in blocks 306 and 308 of figure 3, each base station (for example BTS2) knows if it has to combine the signal components from different cells (C2-1 C2-2 C2-3) before sending the signal to the base station controller BSC1 (block 310 of figure 3) or if it has to send the signal to the base station controller BSC1 directly without combining (block 311 of figure 3). The specific process is as follows:
First, the neighbouring cells (with respect to the serving one C1-3) decode the desired signal in the uplink. There are two options for this:
   1. Direct decoding of the channel about which the base station controller has informed the base station (blocks 306 and 308 of figure 3)
   2. Decode signal from the interference rejection combining
      Second, each base station combines the different signals from the cells. The content of these signals is digital information with CRC information. This combination is based on messages of acknowledgement in the uplink sent by the BSC. Thus, if the serving cell C1-3 is not able to recover the message, the base station controller BSC1 considers the rest of the messages received from the other cells until one message is correct.

If no message is correct, the conventional retransmission procedures defined in GSM layers are used.

In turn, the base station controller BSC1 has information of the different cells that are receiving the information from one call. This corresponds to block 312 of figure 3 and block 405 of figure 4.

For each message that the base station controller BSC1 expects to receive for each call, the base station controller BSC1 combines the information from the different cells that receive that information.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiments described herein, but also encompasses any variations that may be considered by any person skilled in the art (for example, as regard the choice of components, configuration, etc.), within the general scope of the invention as defined in the appended claims.

## Claims

1. A method of enhancing the quality of a communication between a mobile user (MT1) and a serving cell (C1-3) which provides said mobile user (MT1) with a traffic channel, said serving cell (C1-3) belonging to a base station (BTS1) having one or more cells (C1-1, C1-2, C1-3), said base station (BTS1) being attached to a base station controller (BSC1), said base station controller (BSC1) having other base stations (BTS2, BTS3) attached thereto, each of said other base stations (BTS2, BTS3) having at least one cell (C2-1, C2-2, C2-3, C3-1, C3-2, C3-3), said base stations (BTS1, BTS2, BTS3) having their respective timeslots synchronised;
the method comprising the steps of:
- at said mobile user (MT1), measuring a plurality of signal levels received by said mobile user (MT1), said plurality of signal levels comprising the signal contribution of said serving cell (C1-3) at said traffic channel and a respective signal level of a plurality of cells (C1-1, C1-2, C2-1, C2-2, C2-3, C3-1, C3-2, C3-3) belonging to said base station controller (BSC1);
- reporting said measured signal levels from said mobile user (MT1) to said serving cell (C1-3);
- sending said measured signal levels from said serving cell (C1-3) to said base station controller (BSC1); the method being **characterised by** the following steps:
- from said plurality of cells (C1-1, C1-2, C2-1, C2-2, C2-3, C3-1, C3-2, C3-3) which provide a respective signal contribution, selecting a group of cells (C2-2, C2-3, C3-2);
- using the information of said signal contributions of said selected cells (C1-1, C1-2, C2-1, C2-2, C2-3, C3-1, C3-2, C3-3) to increase the quality of the signal associated to said mobile user (MT1) once decoded at said base station controller (BSC1).

2. The method according to claim 1, wherein said step of using the information of said signal contributions of said selected cells (C1-1, C1-2, C2-1, C2-2, C2-3, C3-1, C3-2, C3-3) comprises the step of:
- at said base station controller (BSC1), for each of said selected cells (C1-1, C1-2, C2-1, C2-2, C2-3, C3-1, C3-2, C3-3), checking if said cell has available Abis resources in order to send previously received information to the base station controller (BSC1);
- at said base station controller (BSC1), for each of said selected cells (C1-1, C1-2, C2-1, C2-2, C2-3, C3-1, C3-2, C3-3), checking if said cell has available radio receiving resources.

3. The method according to claim 2, wherein, for each cell, if there are available Abis resources and available radio receiving resources, the base station controller (BSC1) requests said cell to receive said channel comprising the signal contribution of said cell and to send said signal to the base station controller (BSC1) through the Abis.

4. The method according to claim 2, wherein, for each cell, if there are available Abis resources but there are not available radio receiving resources, the base station controller (BSC1) checks whether the desired information to be received is already being received at said cell or not.

5. The method according to claim 4, wherein, if said desired information to be received is already being received at said cell, the base station controller (BSC1) requests the base station to which said cell belongs to receive said channel comprising the signal contribution of said cell by means of its IRC module and to send it to the base station controller (BSC1) through the Abis.

6. The method according to claim 4, wherein, if said desired information to be received is not already being received at said cell, said cell is disregarded.

7. The method according to claim 2, wherein, for each cell, if there are not available Abis resources, said cell is disregarded.

8. The method according to any of claims 3 or 5, wherein, if said cell belongs to the same base station (BTS1) as the serving cell (C1-3), the base station controller (BSC1) requests said same base station (BTS1) to transmit said signal to the base station controller (BSC1) through the Abis.

9. The method according to any of claims 3 or 5, wherein, if said cell belongs to a base station (BTS2, BTS3) different from the base station (BTS1) to which the serving cell (C1-3) belongs, the base station controller (BSC1) requests said base station (BTS1) to compare the signal level of the signal contribution of the serving cell (C1-3) to the signal level of the signal contribution of the other cell and to transmit the signal contribution having better quality to the base station controller (BSC1) through the Abis.

10. The method according to any preceding claim, wherein said step of selecting a group of cells (C2-2, C2-3, C3-2) from said plurality of cells (C1-1, C1-2, C2-1, C2-2, C2-3, C3-1, C3-2, C3-3), comprises the steps of:
- at the base station controller (BSC1), for each cell of said plurality of cells (C1-1, C1-2, C2-1, C2-2, C2-3, C3-1, C3-2, C3-3) the signal contribution of which has been measured, comparing its respective signal level to the signal contribution of said serving cell (C1-3);
- selecting the cells whose signal level contribution is above a certain threshold.

11. A computer program comprising computer program code means adapted to perform the steps of the method according to any claims from 1 to 10 when said program is run on a computer, a digital signal processor, a field-programmable gate array, an application-specific integrated circuit, a micro-processor, a micro-controller, or any other form of programmable hardware.
